## Europäisches Patentamt
## European Patent Office
## Office européen des brevets

(19)

(11) Veröffentlichungsnummer: **0 000 886**
**B1**

(12)

# EUROPÄISCHE PATENTSCHRIFT

(21) Anmeldenummer: **78100598.8**

(22) Anmeldetag: **07.08.78**

(51) Int. Cl.³: **B 29 D 27/02, B 29 B 1/06**

(54) Verfahren und Vorrichtung zum Herstellen eines Schaumstoff- oder Homogenstoff-bildenden Reaktionsgemisches und zu dessen anschliessendem Eintrag in einen Hohlraum

(30) Priorität: **20.08.77 DE 2737616**

(43) Veröffentlichungstag der Anmeldung:
**07.03.79 Patentblatt 79/05**

(45) Bekanntmachung des Hinweises auf die Patenterteilung:
**12.11.80 80/23**

(84) Benannte Vertragsstaaten:
**DE FR GB SE**

(56) Entgegenhaltungen:
**DE - A - 1 948 455**
**DE - A - 2 348 658**
**DE - A - 2 413 337**
**DE - A - 2 544 749**

(73) Patentinhaber: **BAYER AG**
**ZENTRALBEREICH PATENTE,**
**MARKEN UND LIZENZEN**
**D - 5090 LEVERKUSEN 1,**
**BAYERWERK (DE)**

(72) Erfinder: **Weber, Gerd**
**Lippe 22**
**D - 5090 Leverkusen 3 (DE)**
**Skoupi, Dieter**
**Frangenberg 39**
**D - 5251 Linde**
**Lindlar (DE)**
**Schäfer, Hermann, Dr.**
**Sürder Strasse 27**
**D - 5090 Leverkusen 1 (DE)**

Courier Press, Leamington Spa, England.

## Verfahren und Vorrichtung zum Herstellen eines Schaumstoff- oder Homogenstoff-bildenden Reaktionsgemisches und zu dessen anschließendem Eintrag in einen Hohlraum

Die Erfindung betrifft ein Verfahren und eine Vorrichtung zum Herstellen eines Schaumstoff- oder Homogenstoff-bildenden Reaktionsgemisches aus mindestens zwei flüssigen Reaktionskomponenten und zu dessen anschließendem Eintrag in einen Hohlraum, wobei die Reaktionskomponenten in eine Mischzone eingeführt und miteinander vermischt werden und wobei das Gemisch anschließend durch einen auch während des Ausströmvorganges selbsttätig einstellbaren Ausströmquerschnitt hindurchgeführt und in einen Hohlraum eingefüllt wird. Zur Durchführung des Verfahrens wird von einer Vorrichtung ausgegangen, die aus einer in einem Gehäuse angeordneten Mischkammer besteht, die Einlaßöffnungen für die Reaktionskomponenten und eine Auslaßöffnung für das Reaktionsgemisch aufweist, wobei dieser Auslaßöffnung gegenüberliegend eine in Achsrichtung der Auslaßöffnung einstellbare, nachgiebig gelagerte Prallplatte angeordnet ist.

Die Herstellung von Formteilen aus Schaumstoff, Strukturschaumstoff, Integralschaumstoff, insbesondere auf Basis Polyurethan, aber auch aus Homogenstoffen, hat im Hinblick auf die Anwendungsmöglichkeiten einen hohen technischen Stand erreicht. Insbesondere werden immer mehr Formteile aus den genannten Stoffen hergestellt, die Sichtflächen aufweisen oder die hohe Festigkeitseigenschaften besitzen müssen. Besonders kritisch auf die Beschaffenheit der Formteile wirkt sich der Austrag des flüssigen Reaktionsgemisches aus der Mischkammer und der anschließende Eintrag in das Formwerkzeug aus. Insbesondere höherviskose Reaktionsgemische bereiten hierbei Schwierigkeiten. Das Problem wird noch dadurch verstärkt, daß in immer größerem Maße feste Zuschlagstoffe in Pulverform oder kleinkörniger Form mit dem Reaktionsgemisch in den Hohlraum des Formwerkzeuges eingetragen werden müssen. Diese Zuschlag- oder Füllstoffe wirken in der Regel viskositätserhöhend. Man versucht deshalb auf die verschiedenste Weise zu vermeiden daß Teile der Reaktionskomponenten unvermischt in den Hohlraum gelangen; daß auf dem Wege von der Mischkammer zum Hohlraum und im Hohlraum selbst Luft in das Reaktionsgemisch eingeschlagen wird; daß Überwälzungen auftreten, die Schlieren verursachen könnten; und daß sich eine ungleichmäßige Fließfront des Reaktionsgemisches aufbaut. Es ist allgemein bekannt, daß dieses Problem durch eine möglichst laminare Strömung des Reaktionsgemisches zu bewältigen ist.

Man hat zwar verschiedene Lösungen gefunden, die im Einzelfall auch ausreichend sind. In einfachster Weise kann man sich dadurch helfen, daß man das Reaktionsgemisch derart langsam in das offene Formwerkzeug einfließen läßt, daß es über eine möglichst leicht geneigte Ebene der tiefsten Stelle des Formwerkzeuges laminar zufließt. Überwälzungen und kaskadenartiges Fließen müssen vermieden werden. Eine rationelle Fertigungsmethode ist hiermit nicht möglich. Diese Verfahrensweise eignet sich auch nicht zum Eintrag in geschlossene Formwerkzeuge, weil dann der Füllvorgang nicht beobachtet werden kann. Andere Lösungen verwenden einen besonders geformten Angußkanal. Dadurch ist man aber an bestimmte Betriebsbedingungen, wie Strömungsgeschwindigkeit und Viskosität des Reaktionsgemisches, gebunden, so daß die Vorrichtung nicht universell einsetzbar ist. Deshalb hat man auch schon vorgeschlagen, den Angußkanal in einem austauschbaren Teil anzuordnen, so daß man die gleiche Vorrichtung mit unterschiedlichen Angußkanälen unter unterschiedlichen Bedingungen betreiben kann. Auch dies bedeutet einen erhöhten Aufwand.

Schließlich ist eine Vorrichtung bekannt geworden, bei der gegenüber der Auslaßöffnung der Mischkammer eine einstellbare Prallplatte angeordnet ist. Einstellbar ist der Abstand der Prallplatte von der Ausströmöffnung, so daß auf diese Weise eine einwandfreie Quellströmung erzielt wird. Während des Füllvorganges ist der Abstand fixiert. Es ist allerdings möglich, unmittelbar vor Beendigung des Füllvorganges die Prallplatte zurückzufahren, so daß sie mit der Wandung des Formwerkzeuges, in der sie angeordnet ist, eine Ebene bildet. Dadurch wird der gesamte Raum zwischen Auslaßöffnung und Prallplatte bei Beendigung des Füllvorganges voll gefüllt; denn bei dieser vorbekannten Vorrichtung gehört auch der sich zwischen Außlaßöffnung der Mischkammer und Prallplatte befindliche Raum zum Hohlraum des Formwerkzeuges, so daß das gefertigte Formteil auch in diesem Abschnitt eine geeignete Wandstärke besitzt (DE - A - 2 348 658 bzw. US - A - 3 991 147).

Aufgabe der Erfindung ist es, ein Verfahren und eine Vorrichtung zu finden, die auch unter wechselnden Betriebsbedingungen, wie sie häufig bei Änderungen der Durchsatzmenge oder der Viskosität des Reaktionsgemisches erforderlich sind, die Herstellung einwandfreier Formteile gewährleisten.

Verfahrenstechnisch wird diese Aufgabe gemäß der Erfindung dadurch gelöst, daß die Mischzone vor dem Beginn des Einbringens der Reaktionskomponenten verschlossen und erst durch den sich durch das Einführen der Reaktionskomponenten darin aufbauenden Druck bei einem vorgegebenen Druckwert selbsttätig geöffnet wird.

Dadurch wird erreicht, daß insbesondere zu Beginn des Mischvorganges erst Reaktionsgemisch aus der Mischkammer ausfließen kann, wenn diese ganz gefüllt ist. Sollte beim Öffnen der Einlaßorgane eine der Reaktionskomponenten voraneilen, so besteht keine Gefahr, daß dieser Anteil unvermischt in den zu füllenden Hohlraum eingetragen wird, da durch die in der verschlossenen Mischkammer entstehende Turbulenz ein solcher Anteil fein verteilt und damit unschädlich gemacht wird. Gerade zu Beginn des Ausströmvorganges macht sich die selbsttätige Einstellbarkeit des Ausströmquerschnittes besonders günstig bemerkbar, weil entsprechend dem eingestellten Druck die Ausströmgeschwindigkeit konstant bleibt. Das gleiche gilt für das Ende des Ausströmvorganges. Das erfindungsgemäße Verfahren erlaubt es also, in allen kritischen Phasen die Strömungsgeschwindigkeit des Reaktionsgemisches konstant zu halten, wobei diese Konstanz eine Voraussetzung für die Aufrechterhaltung der Laminarströmung ist.

Nach einer besonderen Durchführungsform des erfindungsgemäßen Verfahrens wird gegen Ende des Ausströmvorganges die Größe des Ausströmquerschnittes fixiert.

Dadurch wird erreicht, daß — sofern der im Bereich des Ausströmquerschnittes gelegene Raum ebenfalls ausgefüllt werden soll — dieser vom Verschlußelement der Mischzone frei ist.

Die Vorrichtung zur Durchführung des Verfahrens ist gemäß der Erfindung dadurch gekennzeichnet, daß die Prallplatte vor Beginn des Mischvorganges die Auslaßöffnung verschließt.

Dadurch wird erreicht, daß vor Beginn des Mischvorganges die Auslaßöffnung der Mischkammer abgedichtet ist. Insbesondere bei den allgemein bekannten Mischköpfen mit Ausstoßkolben, bei denen gegen Ende des Mischvorganges der Ausstoßkolben das Gemisch vollständig aus der Mischkammer herausdrückt und damit reinigt, hat sich die Erfindung als günstig erwiesen, weil dort auch jegliche Luft aus der Mischkammer verdrängt wird, indem mit der Prallplatte die Auslaßöffnung abgedichtet wird, solange der Ausstoßkolben noch in Ausstoßstellung steht. Zum Zurückfahren des Ausstoßkolbens ist dann zwar ein erhöhter Kraftbedarf erforderlich, weil in der sich nun bildenden Mischkammer ein Vakuum entsteht; andererseits wird aber das Reaktionsgemisch nun nicht mehr mit der ansonsten in der Mischkammer befindlichen Luft angereichert. Die Nachgiebigkeit der Prallplatte ist einstellbar, damit diese bei einem vorgegebenen, in der Mischkammer herrschenden Druck selbsttätig öffnet und auch der Ausströmquerschnitt entsprechend selbsttätig eingestellt wird.

Aus der DE - A - 24 13 337 ist zwar bekannt, einen der Mischkammer gegenüber verschiebbar gelagerten, unter Vorspannung stehenden und in die Mischkammer hineinschiebbaren Kolben zu verwenden, um das Mischkammervolumen zu Beginn des Mischvorganges klein zu halten. Dabei fährt der Kolben bei ansteigendem Mischkammerdruck aus der Mischkammer selbsttätig zurück, soweit dies die eingestellte Vorspannung zuläßt. Gegen Ende des Mischvorganges wird die Sperre, die den Kolben an der weiteren Rückwärtsbewegung hindert, gelöst, so daß die Mischkammer vom Kolben völlig freigegeben wird.

Mit dieser Vorrichtung ist die Mischkammer zu Beginn des Mischvorganges nach außen hin nicht abgedichtet, und bei Voreilen einer der Komponenten gelangt der unvermischte Teil in den Formhohlraum und verursacht Fehlerstellen im fertigen Formteil. Man hat deshalb diese Vorrichtung dahingehend verbessert, daß ein Hohlkolben verwendet wird, in dessen Hohlraum die ersten Anteile der Komponenten beim Eintritt in die Mischkammer aufgefangen werden und sich im Verlauf des Mischvorganges gründlich miteinander und mit dem restlichen Gemisch vermischen. Diese Ausführungsform ist aber sehr aufwendig und wegen der erforderlichen Dichtflächen des Hohlkolbens sehr problematisch.

Die DE - A - 25 44 749 zeigt eine Mischvorrichtung mit Angußkanal, wobei in diesem Angußkanal ein verschiebbarer Staukörper vorgesehen ist, der in seiner Lage zur Auslaßöffnung der Mischkammer so einstellbar ist, daß in der Mischkammer ein definierter Staudruck aufrechterhalten wird. Ein Verschließen der Auslaßöffnung der Mischkammer vor Beginn des Mischvorganges ist bei dieser Ausführungsform aber nicht möglich.

Schließlich ist noch die DE - A - 19 48 455 bekannt, die eine mit einem Formwerkzeug kombinierte Mischvorrichtung betrifft. Dort ist die Einlaßöffnung des Formhohlraumes durch eine elastische Klappe verschließbar, die sich unter dem Druck des aus der Mischkammer zuströmenden Materials öffnet. Ein Rückwirken auf die Mischkammer ist aber durch diese Klappe nicht gegeben, da zwischen Mischkammer und Formhohlraum der Angußkanal liegt.

Vorzugsweise ist die Prallplatte auf einer Feder gelagert. Am einfachsten ist die Verwendung einer mechanischen Feder, aber auch hydraulische oder pneumatische Federn sind geeignet. Die Feder wird unter Vorspannung gehalten, wobei diese Vorspannung demjenigen Druck entspricht, der sich in der Mischkammer aufbauen muß, damit die Auslaßöffnung freigegeben wird. Durch Verwendung von Federn mit den verschiedensten Kennlinien oder gleichzeitiger Verwendung mehrerer ineinandergeschachtelter Federn verschiedener Federkonstanten lassen sich durch den damit beeinflußbaren Federweg die verschiedensten Effkte erzielen, die im Einzelfalle bei entsprechender Auswahl den laminaren Eintrag des Reaktionsgemisches in den Hohlraum unter den verschiedensten Bedingungen gestattet.

Nach einer besonderen Ausführungsform der erfindungsgemäßen Vorrichtung ruht die Feder auf einer im Gehäuse geführten Stellschraube. Damit läßt sich besonders einfach die Vorspannung einstellen und verändern.

Nach einer weiteren besonderen Ausführungsform ist der Prallplatte eine Fixiervorrichtung zugeordnet. Diese besteht beispielsweise aus einer seitlich in der Prallplatte angeordneten Bohrung, in die ein im Gehäuse gelagerter, unter Federspannung stehender Stift eingreifen kann. Diese Ausführungsform ist insbesondere dann von Vorteil, wenn der Hohlraum derjenige eines Formwerkzeuges ist und der Bereich zwischen Auslaßöffnung und Prallplatte ebenfalls zum Bereich dieses Hohlraumes gehört, in dem ein Formteil gebildet wird. In der Regel wird hier auch der an sich bekannte Mischkopf mit Ausstoßkolben verwendet, der gegen Ende des Füllvorganges den Gemischrest aus der Mischkammer in den Formhohlraum hineinschiebt. Gleichzeitig bei diesem Vorgang wird die Prallplatte so weit zurückgedrückt, daß sie mit der zugehörigen Formwandung eine Ebene bildet, wobei in dieser Stellung die Fixiervorrichtung in Tätigkeit tritt. Deren Lage muß selbstverständlich in bezug auf die gewünschte Stellung der Prallplatte abgestimmt sein.

Diese Ausführungsform ist besonders günstig, denn bei entsprechender günstiger Anordnung des Formhohlraumes zur Auslaßöffnung ermöglicht die Verwendung der erfindungsgemäß selbsttätig einstellbaren Prallplatte nicht nur die Herstellung angußfreier, sondern sogar markierungsfreier Formteile, weil die Markierung mit einer Kante des Formteils zusammenfällt.

Die erfindungsgemäße Vorrichtung kann für die verschiedensten Anwendungsgebiete ausgebildet sein. Vorstehend wurde schon die Ausführungsform als Ausstoßkolben-Mischkopf, der an einem Formwerkzeug angeordnet ist, beschrieben. Auch beim sogenannten Handmischkopf, der vornehmlich zum Eintragen in offene Formwerkzeuge verwendet wird, läßt sich die erfindungsgemäße Prallplatte anbringen. Dabei kann auf Nachmischer verzichtet werden. Die Prallplatte ersetzt auch die ansonsten üblichen Mittel, wie Lochscheiben oder Umlenkkegel, mit denen in der Mischkammer der erforderliche Staudruck aufgebaut wird. Bie Vorrichtungen, die für die Herstellung von Strangprofilen geeignet sind, bringt die erfundungsgemäße Prallplatte den Vorteil, daß sich die Länge des für die Bildung des Strangprofiles erforderlichen Formwerkzeuges verringert, weil die Fließgeschwindigkeiten im Anfangsbereich reduziert werden.

In einer Zeichnung ist die erfindungsgemäße Vorrichtung an zwei Beispielen eines Mischkopfes, der mit einem Ausstoßkolben arbeitet und mit einem Formwerkzeug kombiniert ist, rein schematisch dargestellt und nachstehend näher erläutert. Es zeigen:

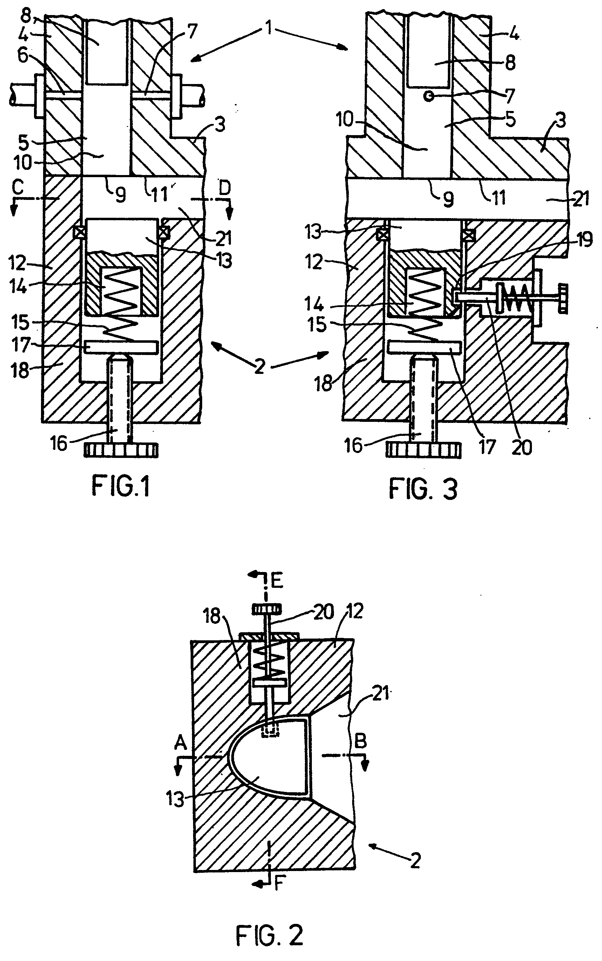

Fig. 1 die Vorrichtung des ersten Ausführungsbeispiels im Längsschnitt gemäß Linie A—B in Fig. 2,

Fig. 2 die Vorrichtung des ersten Ausführungsbeispiels im Querschnitt gemäß Linie C—D nach Fig. 1,

Fig. 3 die Vorrichtung des ersten Ausführungsbeispiels im Längsschnitt gemäß Linie E—F in Fig. 2,

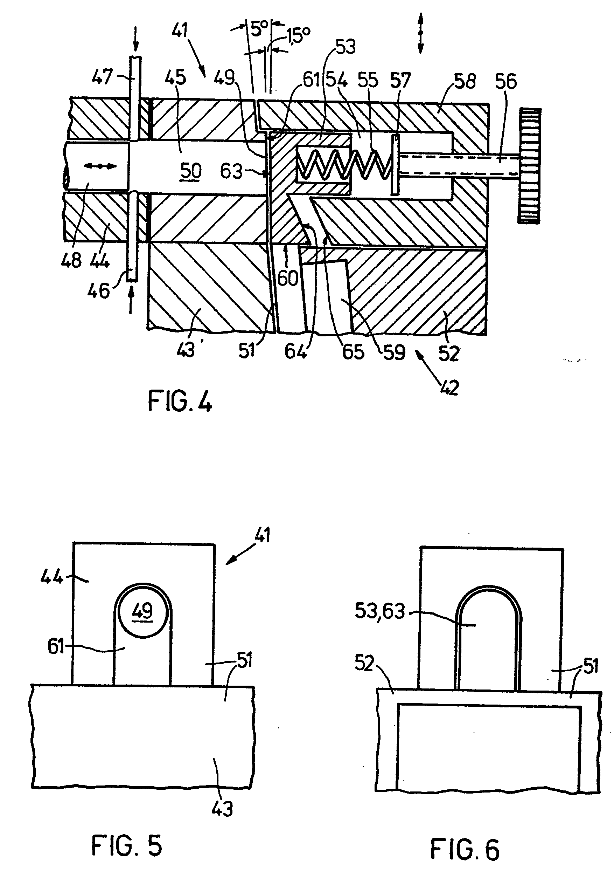

Fig. 4 die Vorrichtung des zweiten Ausführungsbeispiels im Längsschnitt,

Fig. 5 das Formkastenteil der Vorrichtung gemäß dem zweiten Ausführungsbeispiel, an dem der Mischkopf angeordnet ist, in der Draufsicht auf die Trennebene und,

Fig. 6 das Formkastenteil der Vorrichtung gemäß dem zweiten Ausführungsbeispiel, an dem die Prallplatte angeordnet ist, in der Draufsicht auf die Trennebene.

### Fig. 1 bis 3:

Ein Mischkopf 1 ist mit einem Formwerkzeug 2 kombiniert. Am Formwerkzeugoberteil 3 ist ein Gehäuse 4 für eine Bohrung 5 angesetzt. Einlaßöffnungen 6, 7 weisen in diese Bohrung 5. In der Bohrung 5 ist ein Ausstoßkolben 8 geführt, der in Mischstellung die Einlaßöffnungen 6, 7 freigibt, so daß zwischen den Einlaßöffnungen 6, 7 und der am Ende der Bohrung 5 gelegenen Auslaßöffnung 9 die Mischkammer 10 gebildet wird. Eine Formtrennnebene 11, die in Höhe der Auslaßöffnung 9 verläuft, trennt Formwerkzeugoberteil 3 und Formwerkzeugunterteil 12 voneinander. Im Formwerkzeugunterteil 12 ist der Auslaßöffnung 9 gegenüberliegend eine Prallplate 13 angeordnet. Sie ist in einer Bohrung 14 geführt und auf einer Feder 15 gelagert, die sich auf einem mittels einer Stellschraube 16 verschiebbaren Teller 17 abstützt. Die Prallplatte 13 weist zusammen mit dem umgebenden Gehäuse 18 eine Fixiervorrichtung auf, bestehend aus einer Nut 19 und einem Schnappstift 20, der durch Zurückziehen von Hand aus der Nut 19 wieder herausziehbar ist. Der Formhohlraum ist mit 21 bezeichnet.

### Fig. 4 bis 6:

Ein Mischkopf 41 mit einem Formwerkzeug 42 kombiniert. Am Formkastenteil 43 ist ein Gehäuse 44 für eine Bohrung 45 angeflanscht. Einlaßöffnungen 46, 47 weisen in diese Bohrung 45. In der Bohrung 45 ist ein Ausstoßkolben 48 geführt, der in Mischstellung die Einlaßöffnungen 46, 47 freigibt, so daß zwischen dem Ausstoßkolben 48 und der am Ende der Bohrung 45 gelegenen Auslaßöffnung 49 die Mischkammer 50 gebildet ist. Eine Formtrennebene 51 trennt die beiden Formkastenteile 43, 52 voneinander. Am Formkastenteil 52 ist eine Prallplatte 53 in der Bohrung 54 eines angeflanschten Gehäuses 58 geführt. Sie ist auf einer Feder 55 gelagert, die sich auf einem mittels einer Stellschraube 56 verstellbaren Teller 57 abstützt. Das Formwerkzeug 42 öffnet und schließt senkrecht zur Achse der Mischkammer 50, so daß das zu fertigende Formteil markierungsfrei ist, weil die zum Formhohlraum 59 weisende Kante 60 der Prallplatte 53 gegen Ende des Füllvorganges mit einer Kante des Formteils zusammenfällt. Die Formtrennebene 51 steht zur Öffnungs- und Schließrichtung des Formwerkzeuges 42 unter einem Winkel von 5°. Damit wird eine bessere Abdichtung erzielt. Um die Auslaßöffnung 49 herum ist eine aus der Formtrennebene 51 herausstehende Dichtfläche 61 angeordnet, die der Stirnflächenform der Prallplatte 53 entspricht und die zur Öff-nungs- und Schließrichtung des Formwerk-zeuges 42 — ebenso wie die Stirnfläche 63 der Prallplatte 53 — unter einem Winkel von 1,5° geneigt ist, um eine gute Abdichtung zu erzielen. Die Rückseite der Prallplatte 53 weist an der zum Formkastenteil 52 weisenden Seite eine Hinterschneidung 64 auf, die mit einer Gegenfläche 65 des Gehäuses 58 korrespondiert und in der maximalen Öffnungsstellung für gute Abdichtung sorgt.

## Patentansprüche

1. Verfahren zum Herstellen eines Schaum-stoff- oder Homogenstoff bildenden Reaktions-gemisches aus mindestens zwei flüssigen Reak-tionskomponenten und zu dessen anschließen-dem Eintrag in einen Hohlraum (21), wobei die Reaktionskomponenten in eine Mischkammer (10) eingeführt und miteinander vermischt werden, und wobei das Gemisch anschließend durch einen auch während des Ausströmvor-ganges selbsttätig einstellbaren Ausströmquer-schnitt hindurchgeführt und in den Hohlraum (21) eingefüllt wird, dadurch gekennzeichnet, daß die Mischkammer (10) vor dem Beginn des Einbringens der Reaktionskomponenten verschlossen und erst durch den sich durch das Einführen der Reaktionskomponenten darin aufbauenden Druck bei einem vorgegebenen Druckwert selbsttätig geöffnet wird.

2. Verfahren nach Anspruch 1 dadurch gekennzeichnet, daß gegen Ende des Aus-strömvorganges die Größe des Ausströmquer-schnittes fixiert wird.

3. Vorrichtung zur Durchführung des Verfahrens nach Patentanspruch 1, bestehend aus einer in einem Gehäuse (4) angeordneten Mischkammer (10) die Einlaßöffnungen (6, 7) dür die Reaktionskomponenten und um eine Auslaßöffnung (9) für das Reaktionsgemisch aufweist, wobei dieser Auslaßöffnung (9) gegenüberliegend eine in Achsrichtung der Auslaßöffnung (9) einstellbare, nachgiebig gelagerte Prallplatte (13) angeordnet ist, dadurch gekennzeichnet, daß die Prallplatte (13) vor Beginn des Mischvorganges die Auslaßöffnung (9) verschließt.

4. Vorrichtung nach Anspruch 3, dadurch gekennzeichnet daß die Prallplatte (13) auf einer Feder (15) gelagert ist.

5. Vorrichtung nach Anspruch 4, dadurch gekennzeichnet, daß die Feder (15) auf einer im Gehäuse (18) geführten Stellschraube (16) ruht.

6. Vorrichtung nach den Ansprüchen 3 bis 5, dadurch gekennzeichnet, daß der Prallplatte, (13) eine Fixiervorrichtung (19, 20) zugeordnet ist.

## Revendications

1. Procédé pour la fabrication d'un mélange réactionnel donnant une mousse ou un matériau homogène et constitué d'au moins deux composants liquides, et pour l'introduction de ce mélange dans une cavité (21), procédé dans lequel les composants réactionnels sont introduits dans une chambre de mélange (10) et mélangés ensemble, et dans lequel le mélange est ensuite guidé au travers d'une section d'écoulement réglable automatiquement, même pendant la phase d'évacuation, et introduit dans une cavité (21), caractérisé en ce que la chambre de mélange (10) est fermée avant le début de l'introduction des composants réactionnels, et en ce qu'elle n'est ouverte automatiquement pour une pression donnée que sous l'effet de la pression établie par l'introduction des composants réactionnels.

2. Procédé selon la revendication 1, caractérisé en ce que la grandeur de la section d'extraction est fixée vers la fin de la phase d'extraction.

3. Dispositif pour la mise en oeuvre du procédé selon la revendication 1, constitué d'une chambre de mélange (10) placée dans un carter (4) et possédant des ouvertures d'entrée (6, 7) pour les composants réactionnels et une ouverture de sortie (9) pour le mélange réactionnel, cette ouverture (9) étant placée en face d'une chicane (13) supportée de façon élastique et réglable dans le sens de l'axe de l'ouverture de sortie (9), caractérisé en ce que la chicane (13) ferme l'ouverture de sortie (9) avant le début de la phase de mélange.

4. Dispositif selon la revendication 3, caractérisé en ce que la chicane (13) est supportée par un ressort (15).

5. Dispositif selon la revendication 4, caractérisé en ce que le ressort (15) repose sur une vis de réglage (16) guidée dans le carter (18).

6. Dispositif selon l'une quelconque des revendications 3 à 5, caractérisé en ce que la chicane (13) est associée à un dispositif de fixation (19, 20).

## Claims

1. Process for the preparation of a reaction mixture which consists of at least two liquid reactants and forms a foam or homogeneous material, and for subsequent introduction of this mixture into a cavity (21), the reactants being fed into a mixing chamber (10) and mixed with one another, and the mixture then being passed through an outflow cross-section which can be adjusted automatically, even during the flowing-out process, and being filled into the cavity (21), characterised in that the mixing chamber (10) is closed before introduction of the reactants is started and is opened automatically, at a given pressure value, only the pressure which builds up in the chamber due to the introduction of the reactants.

2. Process according to Claim 1, characterised in that the size of the outflow cross-section is fixed towards the end of the flowing-out process.

3. Device for carrying out the process according to Patent Claim 1, which consists of mixing chamber (10) which is located in a housing (4) and has inlet openings (6, 7) for the reactants and an outlet opening (9) for the reaction mixture, this outlet opening (9) being located opposite a baffle (13) which is resiliently mounted and can be adjusted in the axial direction of the outlet opening (9), characterised in that, before the start of the mixing operation, the baffle (13) closes the outlet opening (9).

4. Device according to Claim 3, characterised in that the baffle (13) is mounted on a spring (15).

5. Device according to Claim 4, characterised in that the spring (15) rests on an adjusting screw (16) guided in the housing (18).

6. Device according to Claims 3 to 5, characterised in that the baffle (13) has a fixing device (19, 20).

FIG.1

FIG. 3

FIG. 2

FIG.4

FIG. 5

FIG. 6